# EUROPÄISCHE PATENTANMELDUNG

(11) **EP 1 136 172 A2**
(43) Veröffentlichungstag der Anmeldung: **26.09.2001**
(21) Anmeldenummer: 01250071.6
(22) Anmeldetag: 06.03.2001
(51) Int. Cl.: B23K 37/02, B23K 37/04

(54) **Vorrichtung zum Ausrichten und Schweissen von Blechen eines Kastenträgers, insbesondere eines Hauptträgers für Krane**

(30) Priorität: 13.03.2000 DE 10013227; 18.07.2000 DE 10036366
(71) Anmelder: Atecs Mannesmann AG, 40213 Düsseldorf (DE)
(72) Erfinder: Corredera, Raul, Dipl.-Ing., 28016 Madrid (ES); Dornhöfer, Klaus, Dipl.-Ing., 28708 Fuenie del Fresno (Madrid) (ES); Pösel, Herbert, Dipl.-Ing., 58300 Wetter (DE); Schulz, Christoph, Dipl.-Ing., 58300 Wetter (DE)
(74) Vertreter: Meissner, Peter E., Dipl.-Ing.

(57) **Zusammenfassung**

Die Erfindung betrifft eine Vorrichtung zum Ausrichten und Schweißen von drei oder vier Blechen eines Kastenträgers, insbesondere eines Hauptträgers für Krane, der mindestens zwei in Kastenträgerlängsrichtung beabstandete, an den Innenseitenflächen der Bleche angeschweißte plattenförmige Querschotten aufweist, mit einem nach unten offenen U-förmigen Fertigungsrahmen, der auf zwei parallelen Schienen zwangsgeführt über den Kastenträger hinweg in Kastenträgerlängsrichtung verfahrbar ist und der längs- und/oder vertikalbeabstandete, den Seitenblechen unmittelbar gegenüberliegende und zumindest zeitweise aktivierbare Magnete trägt und mit mehreren am Fertigungsrahmen angeordneten Magneten in Fahrtrichtung nachgeordneten Schweißvorrichtungen, mittels derer die Bleche im Verlauf des Fahrweges jeweils mittels Kehlnähten miteinander paarweise verschweißbar sind. Um eine Vorrichtung anzugeben, bei der das Heften der Bleche vor dem Schweißen entfallen kann, wird vorgeschlagen, dass die Magnete (6) als im Fertigungsrahmen (1) drehgelagerte Rollen ausgebildet sind, deren Drehachsen jeweils in einer Ebene quer zur Kastenträgerlängsrichtung und bezüglich des ausgerichteten unmittelbar gegenüberliegenden Seitenblechs (8a) parallel zu diesem verlaufen.

## Beschreibung

Die Erfindung betrifft eine Vorrichtung zum Ausrichten und Schweißen von Blechen eines Kastenträgers, insbesondere eines Hauptträgers für Krane, gemäß dem Oberbegriff des Anspruchs 1.

Kastenträger, die aus drei oder vier Blechen gebildet sind, also z.B. einem horizontalen Blech als Untergurt und zwei parallel zueinander verlaufenden Blechen als Seitenbleche sowie einem horizontalen Blech als Obergurt, werden insbesondere als Hauptträger für Krane verwendet. Bei der Herstellung sind die beiden Gurt- und Seitenbleche mittels Kehlnähten paarweise miteinander zu verschweißen. Dies erfordert eine exakte vorherige Ausrichtung, die üblicherweise so erfolgt, dass die beispielsweise 30 Meter langen Bleche vorher mittels im Kastenträger angeordneten Querschotten grob ausgerichtet miteinander verbunden werden. Hierzu werden die Querschotten an den Innenseitenflächen der Bleche angeschweißt. Üblicherweise werden mehrere in Kastenträgerlängsrichtung beabstandete quer zur Kastenträgerlängsrichtung verlaufende Querschotten verwendet. Zum Feinausrichten und Schweißen wird nachfolgend ein nach unten offener U-förmiger Fertigungsrahmen zwangsgeführt auf zwei parallelen Schienen über den Kastenträger hinweg gefahren, wobei der Fertigungsrahmen den Kastenträger umfasst. Den Seitenblechen ummittelbar gegenüberliegend sind am Fertigungsrahmen längs- und vertikal beabstandete Elektromagnete angeordnet, die bei stehendem Fertigungsrahmen im aktiven Zustand, also bei Stromfluss, die Seitenbleche mittels der magnetischen Anziehungskräfte jeweils feinausrichten.

Den Elektromagneten nachgeordnet sind am Fertigungsrahmen den Ecken des Kastenträgers jeweils gegenüberliegend Schweißvorrichtungen vorgesehen, mit denen die vorher feinausgerichteten Bleche im Verlauf des Fahrweges des Fertigungsrahmens jeweils mittels Kehlnähten miteinander verschweißt werden.

Der Fertigungsrahmen wird anschließend, d.h. nach Inaktivierung der Elektromagnete jeweils schrittweise weiterverfahren.

Der Nachteil der bekannten Vorrichtung besteht darin, dass die Bleche trotz der Querschotten vorher zusätzlich geheftet werden müssen, d.h. an einzelnen längs beabstandeten Stellen werden die Bleche vor dem eigentlichen Schweißen der Kehlnähte an den Kanten durch Schweißen punktuell miteinander verbunden (geheftet). Dies nimmt einen erheblichen Teil der Fertigungszeit in Anspruch. Weiter werden diese Heftstellen anschließend mitüberschweißt, was die Qualität der Schweißnähte verringert.

Die Aufgabe der Erfindung ist es, eine Vorrichtung anzugeben, bei der das Heften der Bleche vor dem Schweißen entfallen kann.

Die Lösung dieser Aufgabe ist durch die im Anspruch 1 angegebenen Merkmale geben. Durch die kennzeichnenden Merkmale der Unteransprüche ist die Vorrichtung in vorteilhafter Weise weiter ausgestaltet.

Die Lösung sieht drehgelagerte magnetische Rollen vor, so dass die Vorgänge Ausrichten und Schweißen bei kontinuierlicher Fahrbewegung des Fertigungsrahmens erfolgen können, wobei ein vorheriges Heften der Bleche nicht mehr erforderlich ist. Mit anderen Worten sind die magnetischen Rollen gleichzeitig als Halteelemente wirksam, die während des Schweißvorgangs mitlaufen und dabei die Bleche kontinuierlich ausrichten. Mit der Folge, dass das Heften vollständig entfallen kann.

Eine vorteilhafte Ausführung sieht vor, dass die als Rollen ausgebildete Magnete Elektromagnete sind, die einfach abgeschaltet werden können, was den Vorteil hat, dass bei Nichtbetrieb keine Abschirmung der Magnetfelder erfolgen muss.

Ein Ausführungsbeispiel der Erfindung ist in der Zeichnung dargestellt und wird nachfolgend näher beschrieben. Es zeigen:
- Fig. 1: einen Fertigungsrahmen zum Ausrichten und Schweißen von Blechen eines Kastenträgers mittels als Rollen ausgebildeter Magnete,
- Fig. 2: einen Magnet gemäß Fig. 1 und
- Fig. 3: einen Kastenträger vor dem Ausrichten und Schweißen.

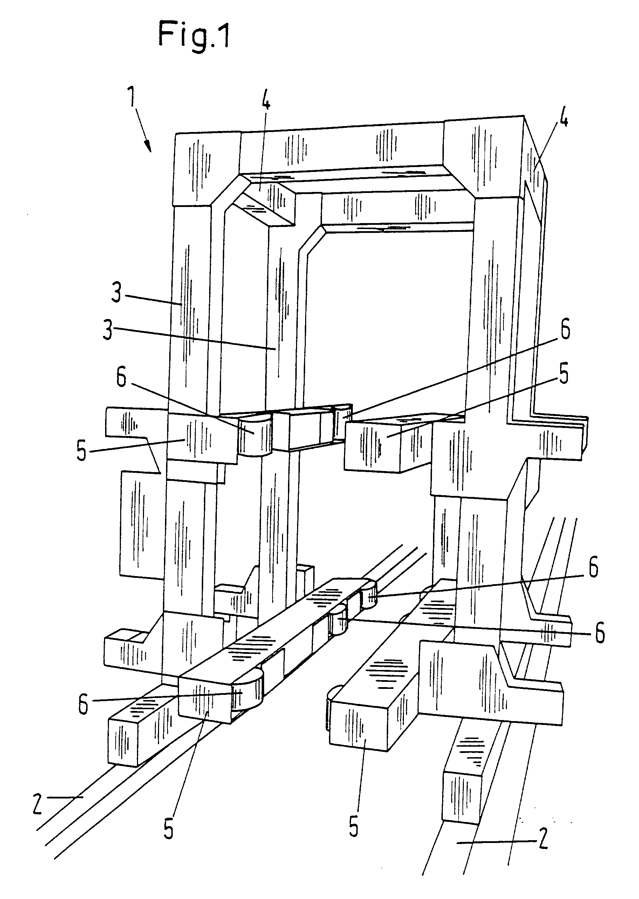

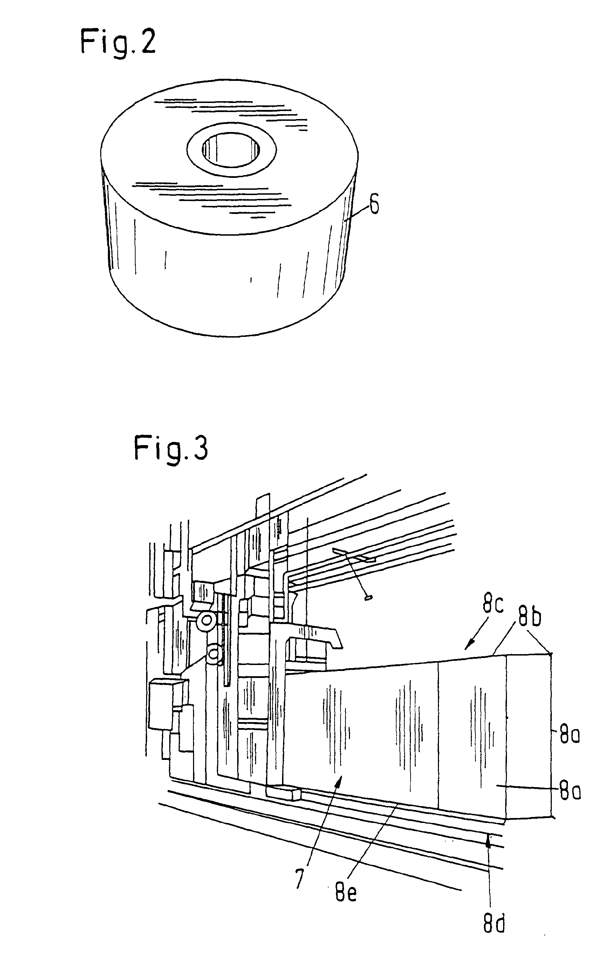

Fig. 1 zeigt eine Vorrichtung zum Ausrichten und Schweißen von Kastenträgem 7 (s. Fig. 3), die insbesondere als Hauptträger für Krane verwendet werden. Der Kastenträger 7 besteht aus vier Blechen 8, zwei vertikalen Seitenblechen 8a, einem auf den oberen Kanten der beiden Seitenbleche 8a aufliegenden horizontalen Blech 8c als Obergurt und einem horizontalen Blech 8d als Untergurt.

Die vier Bleche 8 (Seitenbleche 8a, Obergurt 8c, Untergurt 8d) werden zunächst mittels Querschotten durch Schweißen miteinander verbunden, was einer groben Ausrichtung der noch immer feinausrichtbaren Bleche 8 entspricht.

Zum kontinuierlichen Feinausrichten und dazu zeitlich versetztem ebenfalls kontinuierlichen Schweißen ist der in der Fig. 1 gezeigte unten offene U-förmige Fertigungsrahmen 1 vorgesehen, der unten auf zwei parallelen Schienen 2 zwangsgeführt ist. Der Fertigungsrahmen 1 besteht aus zwei in Schienenlängsrichtung beabstandeten U-förmigen Stimelementen 3, die oben mittels zweier paralleler Längsträger 4 miteinander verbunden sind. Parallel zu den Längsträgem 4 sind im Innern des Fertigungsrahmens 1 in zwei parallelen Vertikalebenen jeweils unten und auf halber Höhe zwei weitere Längsträger 5, je zwei einander gegenüberliegend und auf gleicher Höhe, angeordnet, welche jeweils drei als Rollen ausgebildete Magnete 6 (Fig. 2) mit vertikaler Drehachse aufweisen. Die Magnete 6 ragen mit ihren Laufflächen seitlich aus der Außenkontur der Längsträger 5 heraus. Wie Fig. 1 zeigt, liegen die einander zugewandten Magnete 6 einander paarweise gegenüber, wobei der lichte Abstand jedes Magnetpaars jeweils dem vorgegebenen äußeren Abstand der Seitenbleche 8a des Kastenträgers 7 entspricht.

In Bewegungsrichtung gesehen hinter den Magneten 6 befinden sich Schweißvorrichtungen (nicht gezeigt), mittels derer die Bleche 8 in bekannter Weise an den Ecken des Kastenträgers 7 mittels Kellennähte miteinander verschweißbar sind. Die Schweißvorrichtungen können auch am Fertigungsrahmen 1 fest angeordnet sein.

Zur Fertigung von Kastenträgem 7 wird der Fertigungsrahmen 1 über den beispielsweise 30 Meter langen Kastenträger 7 hinweggefahren, dessen Gurtbleche 8c, 8d und Seitenbleche 8a mittels der Querschotten grob ausgerichtet miteinander verbunden sind, wobei die auf den Außenseiten der Seitenbleche 8a abrollenden Magnete 6 die Seitenbleche 8a mittels der dabei wirksamen starken magnetischen Anziehungskräfte gleichzeitig feinausrichen. Die Magnete 6 übemehmen hierbei die Haltefunktion, so dass die vier Bleche 8 während des kontinuierlichen Verfahrens des Fertigungsrahmens 1 an den Ecken 8b, 8e des Kastenträgers 7 mittels der nachgeordneten Schweißvorrichtungen kontinuierlich miteinander verschweißbar sind.

### Bezugszeichenliste:

- 1: Fertigungsrahmen
- 2: Schiene
- 3: Element
- 4: Längsträger
- 5: Längsträger
- 6: Magnet
- 7: Kastenträger
- 8: Blech
- 8a: Seitenblech
- 8b: Ecke des Kastenträgers
- 8c: Obergurt
- 8d: Untergurt
- 8e: Ecke des Kastenträgers

## Patentansprüche

1. Vorrichtung zum Ausrichten und Schweißen von drei oder vier Blechen, einem horizontalen Blech als Untergurt und zwei parallel oder schräg zueinander verlaufenden Blechen als Seitenbleche, eines Kastenträgers mit rechteckigem bzw. dreieckigem Querschnitt, insbesondere eines Hauptträgers für Krane, der mindestens zwei in Kastenträgerlängsrichtung beabstandete, an den Innenseitenflächen der Bleche angeschweißte plattenförmige Querschotten aufweist,
mit einem nach unten offenen U-förmigen Fertigungsrahmen, der auf zwei parallelen Schienen zwangsgeführt über den Kastenträger hinweg in Kastenträgerlängsrichtung verfahrbar ist und der längs- und/oder vertikalbeabstandete, den Seitenblechen unmittelbar gegenüberliegende und zumindest zeitweise aktivierbare Magnete trägt, die im aktiven Zustand die Seitenbleche mittels magnetischer Anziehungskräfte im Verlauf des Fahrweges jeweils ausrichten, und
mit mehreren am Fertigungsrahmen angeordneten, den Ecken des Kastenträgers jeweils gegenüberliegenden und den Magneten in Fahrtrichtung nachgeordneten Schweißvorrichtungen, mittels derer die Bleche im Verlauf des Fahrweges jeweils mittels Kehlnähten miteinander paarweise verschweißbar sind,
**dadurch gekennzeichnet,**
**dass** die Magnete (6) als im Fertigungsrahmen (1) drehgelagerte Rollen ausgebildet sind, deren Drehachsen jeweils in einer Ebene quer zur Kastenträgerlängsrichtung liegen und bezogen auf die ausgerichteten Seitenbleche (8a) parallel zu dem unmittelbar gegenüberliegenden Seitenblech (8a) verlaufen.

2. Vorrichtung nach Anspruch 1,
**dadurch gekennzeichnet,**
**dass** die Magnete (6) als Elektromagnete ausgebildet sind.

3. Vorrichtung nach einem der Ansprüche 2 oder 3,
**dadurch gekennzeichnet,**
**dass** die Magnete (6) nur längsbeabstandet angeordnet sind.
